# EUROPEAN PATENT APPLICATION

(11) **EP 4 844 893 A1**
(43) Date of publication of application: **25.11.2026**
(21) Application number: 25827302.8
(22) Date of filing: 05.06.2025
(51) Int. Cl.: H01M 10/6561, H01M 10/613, H01M 50/502, H01M 50/178, H01M 50/593

(54) **BATTERY PACK HAVING CELL EDGE COOLING STRUCTURE AND DEVICE INCLUDING SAME**

(30) Priority: 27.06.2024 KR 20240084584
(71) Applicant: LG Energy Solution, Ltd., Seoul 07335 (KR)
(72) Inventor: NAMGOUNG, Hyeok, Daejeon 34122 (KR); LIM, Daehoon, Daejeon 34122 (KR); LEE, Seungjun, Daejeon 34122 (KR); JEONG, Ji Won, Daejeon 34122 (KR); HONG, Seokhyun, Daejeon 34122 (KR); PARK, Jung Beom, Daejeon 34122 (KR)
(74) Representative: Plasseraud IP
(86) International application number: PCT/KR2025/007784
(87) International publication number: WO 2026/005336

(57) **Abstract**

A battery pack according to an embodiment of the present disclosure comprises: a cell module assembly comprising a battery cell stack containing a plurality of stacked battery cells, and bus bar frames each covering both side surfaces of the battery cell stack, and a pack frame on which the cell module assembly is seated, wherein a gap is formed between the pack frame and the upper end of the cell module assembly and between the pack frame and the lower end of the cell module assembly, and wherein air flows into the gap through holes formed in the bus bar frame to cool the edge parts of the battery cells.

## Description

### [TECHNICAL FIELD]

### Cross Citation with Related Application(s)

This application claims priority to and the benefit of Korean Patent Application No. 10-2024-0084584, filed on June 27, 2024, the disclosure of which is incorporated herein by reference in its entirety.

The present disclosure relate to a battery pack having a cell edge cooling structure, and more particularly, to a battery pack in which cooling flow paths are formed through the upper and lower end spaces of the battery cell stack, thereby achieving a battery edge cooling structure, and a device including the same.

### [BACKGROUND]

A secondary battery has attracted attention as a power source for electric vehicles, hybrid electric vehicles, and plug-in hybrid electric vehicles, which have been developed to solve problems, such as air pollution, caused by existing gasoline and diesel vehicles using fossil fuels.

Small-sized mobile devices use one to three battery cells for each device, whereas medium- or large-sized devices such as vehicles require high power and large capacity. Therefore, a middle or large-sized battery module having a plurality of battery cells electrically connected to one another is used.

Since the middle or large-sized battery module is preferably manufactured to have as small a size and weight as possible, a prismatic battery, a pouch-type battery or the like, which can be stacked with high integration and has a small weight relative to capacity, is mainly used as a battery cell of the middle or large-sized battery module. In particular, the pouch-type battery that uses an aluminum laminate sheet or the like as a sheathing member have recently attracted considerable attention due to its advantages, such as being light in weight, having low manufacturing costs, and being easy to modify the shape.

Since the battery cells constituting such middle or large-sized battery modules are composed of chargeable/dischargeable secondary batteries, such a high-output and large-capacity secondary battery generates a large amount of heat during a charging and discharging process. In particular, pouch-type secondary batteries, which are widely used in battery modules, may generate heat while repeating charging and discharging. Since such pouch-type secondary batteries are concentrated in a narrow space of a battery module, the temperature of the battery module may greatly rise while the battery module is in use. If the battery module is heated over a proper temperature, its performance may deteriorate, and in the worst cases, there is also a risk of explosion or ignition. Therefore, it is a very important issue to ensure cooling means when configuring a battery module.

Generally, a water cooling type and an air cooling type may be used for cooling systems, however, the air cooling type is widely used due to electric leakage and waterproofing of a secondary battery. Air cooling type battery modules according to prior arts are often designed with a structure which provides a gap between battery cells stacked in one direction to secure flow paths, and allows air to pass through these flow paths. As an example, Korean Unexamined Patent Publication No. 10-2013-0035192 discloses a technology that provides a gap between unit cells and allows air to flow between unit cells, thereby cooling the battery cells, and Korean Unexamined Patent Publication No. 10-2014-0144781 discloses a technology that involves bringing two cooling fins into contact between battery cells, providing a flow path between the two cooling fins to allow air to flow, and indirectly cooling the battery cells with the cooling fins that have been cooled by the air.

However, the air cooling type battery modules according to the prior arts described above may have low energy densities per unit volume due to the gaps between unit cells required to secure an air flow path. Further, when shocks or vibrations are applied, there is a risk that the unit cells may come into close contact with each other to eliminate the flow path, or foreign matter may flow into narrow air flow paths and clog the flow paths, resulting in insufficient structural stability. Moreover, in order to maintain a consistent gap between unit cells, additional components such as cartridges are required, making it necessary to add a cartridge assembly process, which in turn leads to the problem of increase in costs resulting therefrom.

### [DETAILED DESCRIPTION OF THE INVENTION[]

### [Technical Problem]

It is an object of the present disclosure to provide a battery pack that forms a cooling path through the upper and lower spaces of a battery cell stack without additional structures between adjacent battery cells, thereby achieving a battery edge cooling structure,

However, the problem to be solved by the embodiments of the present disclosure is not limited to the above-described problems, and can be variously expanded within the scope of the technical idea included in the present disclosure.

### [Technical Solution]

According to an aspect of the present disclosure, there is provided a battery pack comprising: a cell module assembly comprising a battery cell stack containing a plurality of stacked battery cells, and bus bar frames each covering both side surfaces of the battery cell stack, and a pack frame on which the cell module assembly is seated, wherein a gap is formed between the pack frame and the upper end of the cell module assembly and between the pack frame and the lower end of the cell module assembly, and wherein air flows into the gap through holes formed in the bus bar frame to cool the edge parts of the battery cells.

The battery pack further comprises cover assemblies each covering both side surfaces of the cell module assembly, which are spaced apart from each other in the stacking direction of the battery cells, wherein each of the cover assemblies is formed with an inlet through which external air flows in and an outlet through which air passed through the cell module assembly is discharged.

Air flowing into the inlet may flow along one side surface of the cell module assembly, the air may flow into the gap through a hole formed in the bus bar frame, and the air passed through the gap may be discharged through the outlet.

The inlet and the outlet may be arranged diagonally relative to each other when viewed in a plan view.

The battery pack comprises a first air flow path formed on a straight line in the direction in which the inlet is formed, a second air flow path formed between the pack frame and the cell module assembly, and a third air flow path formed on a straight line in the direction in which the outlet is formed, wherein the first air flow path and the third air flow path may be formed in the same direction as the stacking direction of the battery cells, and the second air flow path may be formed in a direction perpendicular to the stacking direction of the battery cells.

The second air flow path may correspond to the gap through which air flows in through the holes formed in the bus bar frame.

A first side surface of the battery cell stack on which the cover assembly is formed and a second side surface of the battery cell stack on which the bus bar frame is formed may intersect with each other.

The battery pack may further comprise a cover plate located between the cover assembly and the first side surface of the battery cell stack.

Air flowing in through the holes formed in the bus bar frame comes into direct contact with the electrode leads protruding from the battery cells, thereby cooling the electrode leads.

The electrode lead portion that comes into contact with the air flowing in through the hole may be located in the space between the bus bar frame and the battery cell stack.

The hole may comprise a middle hole formed in the middle portion of the bus bar frame and a lower hole formed in the lower part of the bus bar frame, and air flowing in through the middle hole may come into direct contact with the electrode leads.

The battery pack may further comprise an insulating plate located between the bottom part of the pack frame and the cell module assembly.

The pack frame comprises a bottom frame facing the lower part of the cell module assembly, an upper frame covering the upper part of the cell module assembly, and side surface frames wrapping around the left and right side surfaces of the cell module assembly, wherein the side surface frames may wrap around the bus bar frame.

The upper end part of the bus bar frame and the upper frame of the pack frame are spaced apart from each other, and the lower part of the bus bar frame and the bottom frame of the pack frame may come into direct contact with each other.

According to another aspect of the present disclosure, there is provided a device comprising at least one battery pack as described above.

### [Advantageous Effects]

According to specific embodiments, air can flow in through holes formed in the bus bar housing, thereby increasing the cooling flow rate and cooling not only the cell terraces but also the cell leads.

In addition, according to specific embodiments, a space can be formed between the bus bar housing and the pack frame, thereby cooling the cell edges while the air is moving.

The effects of the present disclosure are not limited to the effects mentioned above, and additional other effects not described above will be clearly understood from the description of the appended claims by those skilled in the art.

### [BRIEF DESCRIPTION OF THE DRAWINGS]

FIG. 1 is an exploded perspective view showing a battery pack according to one embodiment of the present disclosure.
FIG. 2 is a perspective view showing a state where air moves in the battery pack of FIG. 1.
FIG. 3 is a perspective view showing battery cells included in the battery pack of FIG. 1.
FIG. 4 is a perspective view showing a cell module assembly according to one embodiment of the present disclosure.
FIG. 5 is a front view showing a bus bar frame as viewed in the -x-axis direction of FIG. 1.
FIG. 6 is a cross-sectional view showing a state where air moves on a cross section taken along the zx plane of FIG. 1.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are exaggerated.

Further, when a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity. Meanwhile, similar to the case where it is described as being located "on" or "above" another part, the case where it is described as being located "below" or "under" another part will also be understood with reference to the above-mentioned contents.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

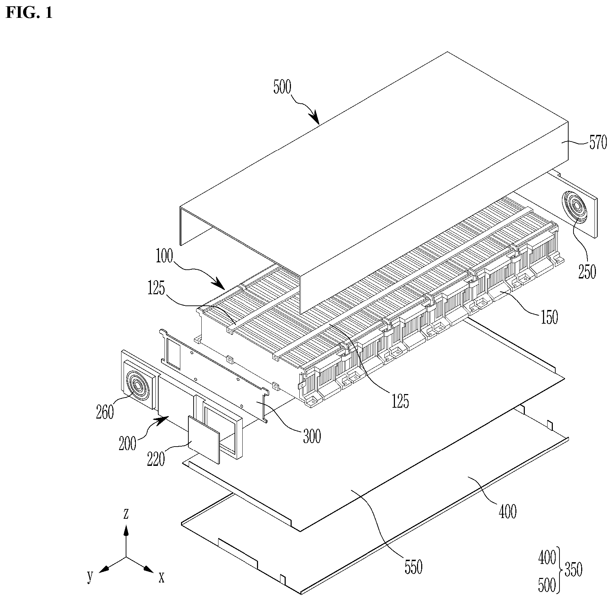

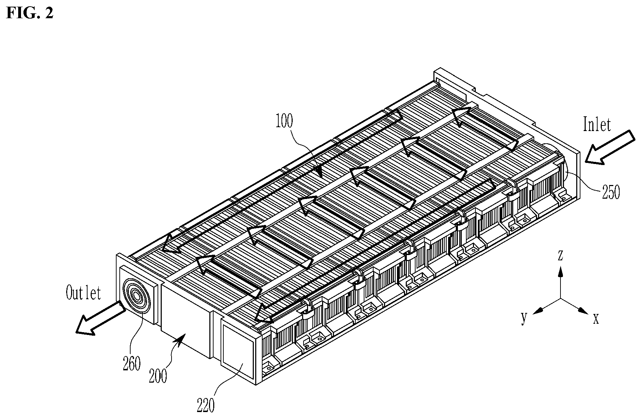

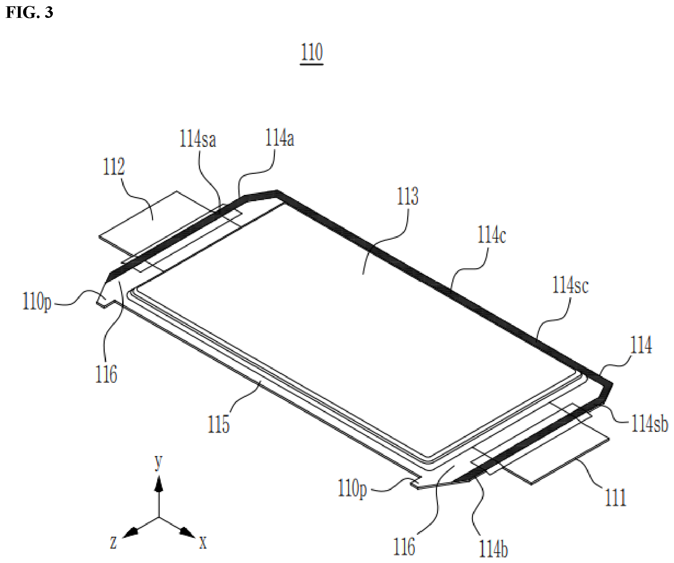

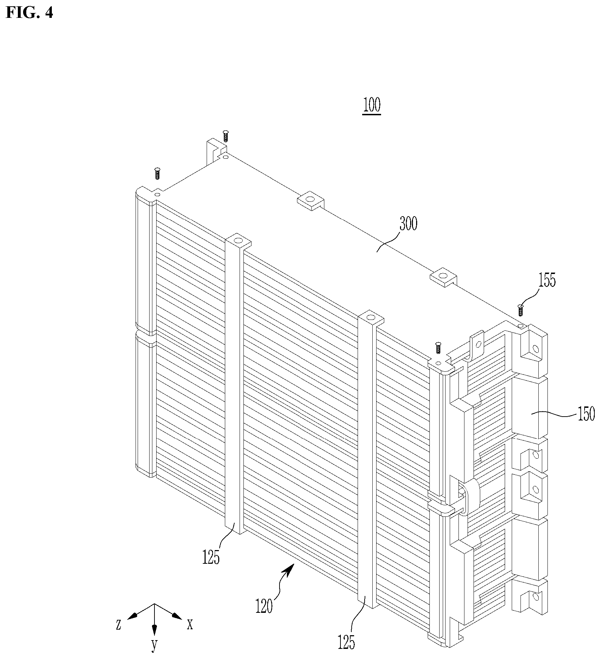

FIG. 1 is an exploded perspective view showing a battery pack according to one embodiment of the present disclosure. FIG. 2 is a perspective view showing a state where air moves in the battery pack of FIG. 1. FIG. 3 is a perspective view showing battery cells included in the battery pack of FIG. 1. FIG. 4 is a perspective view showing a cell module assembly according to one embodiment of the present disclosure.

Referring to FIGS. 1 to 4, a cell module assembly 100 according to one embodiment of the present disclosure comprises a battery cell stack 120 in which a plurality of battery cells 110 including electrode leads 111, 112 protruding in directions opposite to each other are stacked, a holding band 125 that fixes the battery cell stack 120, and a bus bar frame 150 disposed on one surface of the battery cell stack 120 in the direction (x-axis direction) in which the electrode leads 111 protrude.

First, referring to FIG. 3, the battery cell 110 is preferably a pouch-type battery cell. For example, the battery cell 110 according to the present embodiment has a structure in which two electrode leads 111, 112 face each other and each protrude from one end part 114a and the other end part 114b of the cell body 113, respectively. More specifically, the electrode leads 111, 112 are connected to an electrode assembly (not shown) and protrude from the electrode assembly (not shown) to the outside of the battery cell 110.

Meanwhile, the battery cell 110 can be produced by adhering both end parts 114a, 114b of a battery case 114 and one side part 114c connecting them in a state in which an electrode assembly (not shown) is stored in a pouch case 114. In other words, the battery cell 110 according to the present embodiment has a total of three sealing parts 114sa, 114sb, 114sc, wherein the sealing parts 114sa, 114sb, 114sc have a structure that is sealed by a method such as thermal fusion, and the remaining other one side part may be composed of a connection part 115. The cell case 114 may be made of a laminate sheet including a resin layer and a metal layer.

Further, the connecting part 115 may extend long along one edge of the battery cell 110, and a protrusion part 110p of the battery cell 110 called a bat-ear may be formed at the end part of the connection part 115. Further, a terrace part 116 may be formed between the electrode leads 111, 112 and the cell body 113 while the cell case 114 is sealed with the protruding electrode leads 111, 112 interposed between them. That is, the battery cell 110 includes a terrace part 116 that is extended and formed from the cell case 114 in the direction in which the electrode leads 111, 112 protrude.

According to the present embodiment, an upper end part and a lower end part of the battery cell 110 may correspond to one side part 114c and a connection part 115 for connecting both end parts 114a, 114b of the cell case 114, respectively. The upper end part and the lower end part of the battery cell 110 may be portions that are subjected to cell edge cooling, as described below.

The battery cells 110 may be configured in a plurality of numbers, and the plurality of battery cells 110 may be stacked so as to be electrically connected to each other, thereby forming a battery cell stack 120. Referring to FIGS. 3 and 4, the battery cells 110 may be stacked along the y-axis direction to form a battery cell stack 120. A bus bar frame 150 may be located on one surface of the battery cell stack 120 in the direction (x-axis direction) in which the electrode leads 111 protrude. Although not specifically shown in the figure, a bus bar frame may also be located on the other surface of the battery cell stack 120 in the direction (-x-axis direction) in which the electrode leads 112 protrude. The battery cell stack 120 and the bus bar frame 150 may form a cell module assembly 100, and the holding band 125 may prevent flowage of the battery cells 110 included in the battery cell stack 120. The cell module assembly 100 according to the present embodiment may form a structure in which the module frame and the end plate are removed. The cell module assembly 100 according to the present embodiment may include a cover plate 300 and a holding band 125, as a substitute for a module frame.

As the module frame and the end plate are removed, complex processes requiring precise control, such as a process of storing the battery cell stack 120 inside the module frame or a process of assembling the module frame and the end plate, are not required. Further, the present embodiment has an advantage that the weight of the cell module assembly 100 can be greatly reduced by the amount corresponding to the removed module frame and end plates. Further, the cell module assembly 100 according to the present embodiment has the advantage of being excellent in rework capability in the battery pack assembly process due to the removal of the module frame, but this can be compared to conventional designs where rework is impossible when defects occur in the welded structure of the module frame.

The cover plate 300 is a plate-shaped member and is located on both side surfaces of the battery cell stack 120, thereby supplementing the rigidity of the cell module assembly 100. Such a cover plate 300 may include a plastic material having elastic properties and produced by injection molding, and in some cases, a leaf spring material may be applied.

The holding band 125 is a member that wraps around the battery cell stack 120 at both end parts of the battery cell stack 120, and may serve to fix the plurality of battery cells 110 constituting the battery cell stack 120 and the cover plate 300. Specifically, a groove is formed on one surface of the cover plate 300, and after the end part of the holding band 125 is seated in the groove, the end part of the holding band 125 and the cover plate 300 can be coupled via a fixing member (not shown). Two pairs of holding bands 125 can be applied to one cell module assembly 100, wherein one pair of holding bands 125 wraps around the upper part of the cell module assembly 100 (the surface that views the cell module assembly in the -z-axis direction in FIG. 4), and the other pair of holding bands 125 wraps around the lower portion of the cell module assembly 100 (the surface that views the cell module assembly in the z-axis direction in FIG. 4).

This holding band 125 may be made of a material having a predetermined elasticity, and specifically, a leaf spring structure may be applied. The holding band 125 may be formed of a metal strap.

After fixing the battery cell stack 120 and the cover plate 300 through the holding bands 125 in this manner, the bus bar frame 150 may be located on a front surface and a rear surface of the battery cell stack 120 corresponding to the direction in which the electrode leads 111 protrude. A groove for fastening a fixing member 155 may be formed at the end part of the cover plate 300 that overlaps with the bus bar frame 150. The bus bar frame 150 and the cover plate 300 may be coupled through the fixing member 155 to form a cell module assembly 100.

Referring to FIG. 1, a battery pack according to the present embodiment includes a cell module assembly 100 comprising a battery cell stack 120 containing a plurality of battery cells 110, and bus bar frames 150 each covering both side surfaces of the battery cell stack 120, a pack frame 350 on which the cell module assembly 100 is seated, a cover plate 300 located on both side surfaces of the battery cell stack 120 in the stacking direction of the battery cells 110, and a cover assembly 200 for covering the cover plate 300. A terminal cover 220 for covering a terminal part (not shown) may be coupled to the cover assembly 200.

The pack frame 350 may include a bottom frame 400, an upper frame 500, and side surface frames 570. The bottom frame 400 faces the lower part of the cell module assembly 100, the upper frame 500 covers the upper part of the cell module assembly 100, and the side surface frames 570 may wrap around the left and right side surfaces of the cell module assembly 100. The side surface frames 570 according to the present embodiment may be arranged to face the bus bar frame 150.

According to the present embodiment, the upper frame 500 and the side surface frames 570 may be formed integrally.

At least two cell module assemblies 100 of FIG. 4 are arranged along the y-axis direction, and the cell module assemblies 100 may be mounted on the bottom frame 400 of the pack frame. FIG. 1 shows that four cell module assemblies 100 are arranged, but the arrangement is not limited thereto.

In the battery pack according to the present embodiment, an insulating plate 550 may be arranged between the bottom frame 400 and the cell module assembly 100. In this case, the lower part of the cell module assembly 100 may come into contact with the upper part of the insulating plate 550. The insulating plate 550 is made to maintain electrical insulation between the battery cells 110 included in the cell module assembly 100 and the bottom frame 400.

The cover plate 300 according to the present embodiment is formed on both side surfaces of the battery cell stack 120 that are spaced apart from each other in the stacking direction (y-axis direction in FIG. 1) of the battery cells 110, thereby covering the battery cell stack 120.

The cover assembly 200 according to the present embodiment may be formed on both side surfaces of the cell module assembly 100 that are spaced apart from each other in the stacking direction (y-axis direction in FIG. 1) of the battery cells 110, thereby covering the cover plate 300. A first side surface of the battery cell stack 120 on which the cover assembly 200 is formed, and a second side surface of the battery cell stack on which the bus bar frame 150 included in the cell module assembly 100 is formed may intersect each other. In other words, the side surface on which the cover assembly 200 is formed and the side surface on which the bus bar frame 150 is formed may be perpendicular to each other on the basis of the cell module assembly 100.

The cover assembly 200 according to the present embodiment may be formed with an inlet 250 through which external air flows in and an outlet 260 through which air passed through the cell module assembly 100 is discharged. Specifically, an inlet 250 is formed in the cover assembly 200 for covering one side surface of the cell module assembly 100, and an outlet 260 is formed in the cover assembly 200 for covering the other side surface of the cell module assembly 100. According to the present embodiment, the inlet 250 and the outlet 260 may be arranged diagonally from each other when viewed in a plan view. Here, when viewed in a plan view may refer to the arrangement of the battery pack when viewed along the z-axis direction in FIG. 2.

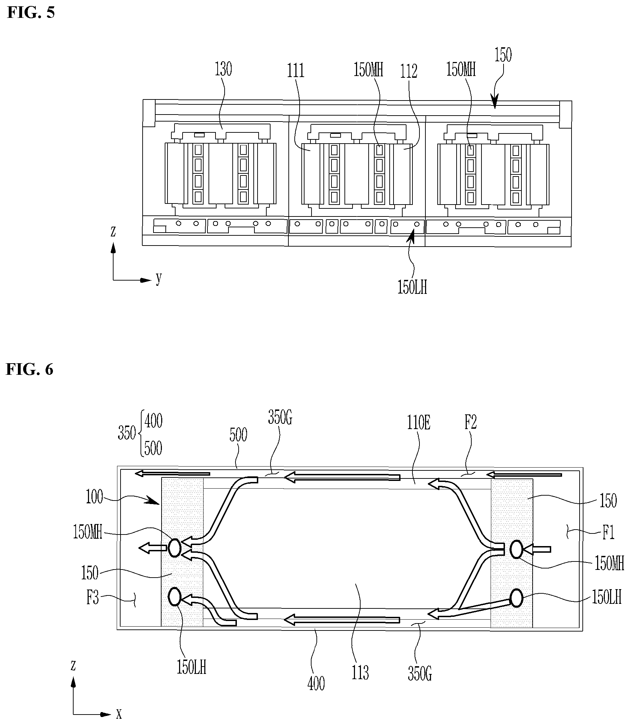

FIG. 5 is a front view showing a bus bar frame as viewed in the -x-axis direction of FIG. 1.

Referring to FIG. 5, the bus bar frame 150 according to the present embodiment may be located on one surface of the battery cell stack 120, thereby covering the battery cell stack 120 and simultaneously guiding connection between the battery cell stack 120 and an external device. For example, the bus bar frame 150 may be mounted with a bus bar 130, a terminal bus bar (not shown), and an inter-bus bar (not shown). The battery cells 110 included in the battery cell stack 120 may be connected in series or parallel by the bus bar 130, the terminal bus bar, or the inter-bus bar, and the battery cells 110 may be electrically connected to external devices or circuits through the terminal bus bar exposed to the outside of the cell module assembly 100.

The bus bar frame 150 may include an electrically insulating material. The bus bar frame 150 may restrict the bus bar 130 or the terminal bus bar from coming into contact with the battery cells 110, except for the portion where the bus bar 130 or the terminal bus bar is joined to the electrode leads 111, 112, thereby preventing short circuits.

At least one hole 150H may be formed in the bus bar frame 150 according to the present embodiment. After external air flows into the pack frame 350 through the inlet 250 (shown in FIG. 2) included in the battery pack according to the present embodiment, the air may flow into the space formed at the upper part of the battery cell stack 120 and/or the lower part of the battery cell stack 120 through the hole 150H formed in the bus bar frame 150. The air that has flowed in this manner may act as a coolant to cool heat generated in the battery cell 110. The path through which the coolant moves and the process of cooling the battery cell 110 according to the present embodiment will be described later.

The hole 150H according to the present embodiment may include a middle hole 150MH formed in the middle portion of FIG. 5 on the basis of the height, and a lower hole 150LH formed in the lower part of the bus bar frame 150.

Next, the coolant moving path and the battery cell cooling process according to one embodiment of the present disclosure will be described with reference to FIGS. 2 and 6.

FIG. 6 is a cross-sectional view showing a state where air moves on a cross section taken along the zx plane of FIG. 1.

Referring to FIGS. 2 and 6, external air may flow into the pack frame 350 through the inlet 250. Air flowing in through the inlet 250 may flow along one side surface of the cell module assembly 100. As an example, air flowing in through the inlet 250 can move along a first air flow path F1. The first air flow path F1 can be formed on a straight line in the direction in which the inlet 250 is formed. The direction in which air flows in through the inlet 250 corresponds to the y-axis direction in FIG. 2, and the first air flow path F1 may extend along the y-axis direction.

Air flowing into the first air flow path F1 may flow into the space between the pack frame 350 and the cell module assembly 100 through the middle hole 150MH and the lower hole 150LH formed in the bus bar frame 150. The space between the pack frame 350 and the cell module assembly 100 may correspond to a gap 350G formed between the upper frame 500 of the pack frame and the upper part of the cell module assembly 100, and between the bottom frame 400 of the pack frame and the lower part of the cell module assembly 100. In this case, the gap 350G formed between the upper frame 500 of the pack frame and the upper part of the cell module assembly 100, and the gap 350G formed between the bottom frame 400 of the pack frame and the lower part of the cell module assembly 100 may each be a second air flow path F2.

Therefore, air flowing into the first air flow path F1 may flow into the second air flow path F2 again, and cool the edge 110E of the battery cell 110. The edge part 110E of the battery cell 110 may correspond to the upper and lower end parts of the battery cell 110, as described with reference to FIG. 3.

As shown in FIG. 6, the second air flow path F2 at the upper end part of the battery cell 110 can store the air flowing in through the empty space between the bus bar frame 150 and the upper frame 500 of the pack frame, as well as the air flowing in through the middle hole 150MH. That is, the upper part of the bus bar frame 150 and the upper frame 500 of the pack frame may be spaced apart from each other.

The second air flow path F2 at the lower end part of the battery cell 110 may store the air flowing in through the middle hole 150MH and the air flowing in through the lower hole 150LH. At this time, the battery cell stack 120 is spaced apart from the bottom frame 400 to form the second air flow path F2 at the lower end part. If an insulating plate 550 is interposed between the bottom frame 400 and the battery cell stack 120, the battery cell stack 120 may be spaced apart from the insulating plate 550. For this purpose, the lower end part of the bus bar frame 150 may come into direct contact with the bottom frame 400 of the pack frame. In other words, the level of the bottom part of the bus bar frame 150 may be lower than the level of the bottom part of the battery cell stack 120.

According to the present embodiment, in a process where air from the first air flow path F1 moves to the second air flow path F2 through the central hole 150MH and the lower hole 150LH formed in the bus bar frame 150, the air may come into direct contact with the electrode leads 111, 112 protruding from the battery cells 110. The portions of the electrode leads 111, 112 that come into direct contact with air may be electrode lead portions located in the space between the bus bar frame 150 and the battery cell stack 120. The electrode lead portion may be different from the electrode lead portion that protrudes outside the bus bar frame 150 and is joined to the bus bar 130 as shown in FIG. 5. Therefore, according to the present embodiment, the air for cooling the battery cell edge part 110E may sufficiently flow in through the hole 150H of the bus bar frame 150, thereby improving cooling efficiency. In addition, considerable heat can be generated in the portions of the electrode leads 111, 112 protruding from the battery cell 110 while being located inside the bus bar frame 150. By allowing air to pass through these areas for cooling, cooling efficiency can be further improved.

Due to insufficient space between the bus bar frame 150 and the pack frame 350, the amount of air flowing in through the empty space between the bus bar frame 150 and the upper frame 500 of the pack frame is relatively small. Therefore, air flowing in through the middle hole 150MH and the lower hole 150LH formed according to the present embodiment can enhance the cooling efficiency of the edge part 110E of the battery cell 110.

After the air moves along the cell edge part 110E, it absorbs heat from the battery cells 110, and the warmed air may be discharged into the third air flow path F3 through the central hole 150MH and the lower hole 150LH formed in the bus bar frame 150 adjacent to the outlet 260. The air flowing into the third air flow path F3 may be discharged to the outside of the pack frame 350 via the outlet 260.

The third air flow path F3 may be formed on a straight line in the direction in which the outlet 260 is formed. The direction in which air is discharged through the outlet 260 corresponds to the y-axis direction in FIG. 2, and the third air flow path F3 may extend along the y-axis direction.

The first air flow path F1 and the third air flow path F3 according to the present embodiment are formed in the same direction as the stacking direction of the battery cells 110, and the second air flow path F2 may be formed in a direction perpendicular to the stacking direction of the battery cells 110.

The battery module and the battery pack including the same as previously mentioned may be applied to various devices. Specifically, such devices can be applied to transportation vehicles such as an electric bike, an electric vehicle, and a hybrid electric vehicle. However, the present disclosure is not limited thereto, and can be applied to various devices capable of using a battery module and a battery pack including the same, which also falls within the scope of the present disclosure.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: cell module assembly
110E: edge part
120: battery cell stack
150H: hole
155: fixing member
200: cover assembly
250: inlet
260: outlet
300: cover plate
350: pack frame
350G: gap

## Claims

1. A battery pack comprising:
a cell module assembly comprising a battery cell stack containing a plurality of stacked battery cells, and bus bar frames each covering both side surfaces of the battery cell stack, and
a pack frame on which the cell module assembly is seated,
wherein a gap is formed between the pack frame and the upper end of the cell module assembly and between the pack frame and the lower end of the cell module assembly, and
wherein air flows into the gap through holes formed in the bus bar frame to cool the edge parts of the battery cells.

2. The battery pack of claim 1,
further comprising cover assemblies each covering both side surfaces of the cell module assembly, which are spaced apart from each other in the stacking direction of the battery cells,
wherein each of the cover assemblies is formed with an inlet through which external air flows in and an outlet through which air passed through the cell module assembly is discharged.

3. The battery pack of claim 2,
wherein air flowing into the inlet flows along one side surface of the cell module assembly, the air flows into the gap through a hole formed in the bus bar frame, and the air passed through the gap is discharged through the outlet.

4. The battery pack of claim 3,
wherein the inlet and the outlet are arranged diagonally relative to each other when viewed in a plan view.

5. The battery pack of claim 3,
comprising a first air flow path formed on a straight line in the direction in which the inlet is formed, a second air flow path formed between the pack frame and the cell module assembly, and a third air flow path formed on a straight line in the direction in which the outlet is formed,
wherein the first air flow path and the third air flow path are formed in the same direction as the stacking direction of the battery cells, and the second air flow path is formed in a direction perpendicular to the stacking direction of the battery cells.

6. The battery pack of claim 5,
wherein the second air flow path corresponds to the gap through which air flows in through the holes formed in the bus bar frame.

7. The battery pack of claim 2,
wherein a first side surface of the battery cell stack on which the cover assembly is formed and a second side surface of the battery cell stack on which the bus bar frame is formed intersect with each other.

8. The battery pack of claim 7,
further comprising a cover plate located between the cover assembly and the first side surface of the battery cell stack.

9. The battery pack of claim 1,
wherein air flowing in through the holes formed in the bus bar frame comes into direct contact with the electrode leads protruding from the battery cells, thereby cooling the electrode leads.

10. The battery pack of claim 9,
wherein the electrode lead portion that comes into contact with the air flowing in through the hole is located in the space between the bus bar frame and the battery cell stack.

11. The battery pack of claim 9,
wherein the hole comprises a middle hole formed in the middle portion of the bus bar frame and a lower hole formed in the lower part of the bus bar frame, and
air flowing in through the middle hole comes into direct contact with the electrode leads.

12. The battery pack of claim 1,
further comprising an insulating plate located between the bottom part of the pack frame and the cell module assembly.

13. The battery pack of claim 1,
wherein the pack frame comprises,
a bottom frame facing the lower part of the cell module assembly,
an upper frame covering the upper part of the cell module assembly, and
side surface frames wrapping around the left and right side surfaces of the cell module assembly,
wherein the side surface frames wraps around the bus bar frame.

14. The battery pack of claim 13,
wherein the upper end part of the bus bar frame and the upper frame of the pack frame are spaced apart from each other, and the lower part of the bus bar frame and the bottom frame of the pack frame come into direct contact with each other.

15. A device comprising at least one battery pack as set forth in claim 1.
